(19) Europäisches Patentamt
European Patent Office
Office européen des brevets

(11) EP 3 799 952 A1

# (12) DEMANDE DE BREVET EUROPEEN

(43) Date de publication:
**07.04.2021 Bulletin 2021/14**

(51) Int Cl.:
***B01J 13/02*** *(2006.01)* ***B01J 13/20*** *(2006.01)*

(21) Numéro de dépôt: **19306287.4**

(22) Date de dépôt: **04.10.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **Surfactis Technologies**
**49100 Angers (FR)**

(72) Inventeurs:
- **FAVRAT, Olivier**
  **49100 ANGERS (FR)**
- **PORTET, David**
  **49125 BRIOLLAY (FR)**

(74) Mandataire: **Regimbeau**
**20, rue de Chazelles**
**75847 Paris Cedex 17 (FR)**

## (54) PROCEDE DE PREPARATION DE NANOPARTICULES FRAMBOISE

(57) La présente invention concerne un procédé de préparation d'une suspension dispersée de nanoparticules dites « framboise » ayant un diamètre de taille inférieure ou égale à 130 nm, les nanoparticules framboise étant éventuellement fonctionnalisées avec une molécule organique hydrophobe. La présente invention se rapporte également à une suspension comprenant lesdites nanoparticules framboise susceptible d'être obtenue par ledit procédé et à son utilisation pour rendre une surface superhydrophobe ou superhydrophile, selon que les nanoparticules sont fonctionnalisées ou non avec une molécule organique hydrophobe. Enfin, la présente invention concerne un procédé de recouvrement de surface à l'aide d'une suspension selon l'invention en une seule étape.

EP 3 799 952 A1

## Description

### Domaine de l'invention

La présente invention concerne un procédé de préparation d'une suspension dispersée de nanoparticules dites « framboise » ayant un diamètre de taille inférieure ou égale à 130 nm, les nanoparticules framboise étant éventuellement fonctionnalisées avec une molécule organique hydrophobe. La présente invention se rapporte également à une suspension comprenant lesdites nanoparticules framboise susceptible d'être obtenue par ledit procédé et à son utilisation pour rendre une surface superhydrophobe ou superhydrophile, selon que les nanoparticules sont fonctionnalisées ou non avec une molécule organique hydrophobe. Enfin, la présente invention concerne un procédé de recouvrement de surface à l'aide d'une suspension selon l'invention en une seule étape.

### Description de l'art antérieur

Obtenir des surfaces superhydrophiles ou superhydrophobes est un challenge qui est maintenant abordé dans la littérature scientifique depuis une quinzaine d'années. Ces phénomènes sont dépendants :

i) d'une rugosité de surface hiérarchisée sur plusieurs échelles (J. Song et al. 2012 Chemical Engineering Journal) et
ii) d'une chimie de surface hydrophile pour les surfaces superhydrophiles, ou une chimie de surface hydrophobe pour les surfaces superhydrophobes comme le décrit la demande WO2015177229.

Pour maîtriser la rugosité de surfaces, plusieurs approches existent. Celles dites « top-down », où une surface va être gravée afin d'y faire apparaitre une rugosité sous forme de piques, d'aiguilles, ou de piliers (Yan et al. 2011 Advances in Colloid and Interface Science ; Celia et al. 2013 J Colloid Interface Science). Dans cette méthode la gravure peut être réalisée par plusieurs techniques qui permettent de contrôler la profondeur et la géométrie de la rugosité formée. Ces techniques sont en général assez lourdes à mettre en oeuvre pour obtenir la rugosité désirée simplement et sur des surfaces étendues. Il faut par ailleurs procéder en plusieurs étapes pour texturer puis rendre la surface hydrophobe.

L'autre méthode, bottom-up, consiste à ajouter de la matière sur des surfaces lisses pour leur conférer une rugosité (Liu et al. 2015 Ceramics International, Ming et al. 2005 Nanoletters). Dans ce cas, il est possible de déposer des objets de différentes tailles sur ces surfaces pour en assurer la rugosité. La difficulté de cette technique est la maîtrise des objets déposés, et donc la maîtrise de la rugosité.

Pour obtenir un effet superhydrophobe, et dans une moindre mesure un effet superhydrophile, il est nécessaire de disposer d'une rugosité suffisante. La théorie issue de l'étude des feuilles de lotus (Gao et al. 2006 Langmuir), indique qu'il est préférable que la rugosité ait une double échelle; micrométrique et nanométrique par exemple. Un empilement organisé de particules de taille adaptée permet par exemple d'atteindre cet effet. Les particules utilisées doivent cependant avoir une taille suffisante pour assurer l'effet superhydrophile ou superhydrophobe.

Cette problématique de maîtrise de la rugosité est également importante lorsque la transparence de la surface est en jeu. En effet, la rugosité altère la transmission de la lumière (loi de Mie). Les objets d'une taille supérieure à $\lambda/4$ favorisent la diffusion de la longueur d'onde incidente $\lambda$. Pour ne pas favoriser ce phénomène dans le domaine du visible ($\lambda > 400$ nm), les objets utilisés pour rendre la surface rugueuse ne doivent pas dépasser un diamètre de 100 nm. Dans la pratique, les surfaces ne sont pas parfaitement planes et les objets idéalement sphériques. Des résultats de la littérature montrent que des objets ayant un diamètre de 130 nm n'altèrent pas ou altèrent peu les performances optiques d'une surface (Portet et al. WO2015177229) Par conséquent, la taille des objets, typiquement des particules, doit être inférieure ou égale à 130 nm.

Pour contourner cette problématique, une méthode consiste à réaliser des particules creuses (hollow-spheres) recouvertes de particules de petite taille, le coeur de la particule étant ensuite dissout. Cela permet de disposer de particules de plus grande taille sans perturber la transmission de la lumière grâce à la partie creuse de la particule. La synthèse de ces particules répond à des techniques lourdes et complexes à mettre en oeuvre à une échelle industrielle (Vollmer et al. WO2012107406).

Une autre technique consiste à synthétiser *in situ* les particules amenant la seconde échelle de rugosité par la méthode Stöber sur des particules de grande taille. Dans ce cas, il est possible de faire croître des nanoparticules de silice dont la croissance est limitée par l'ajout d'un agent fluoré (Zheng-Bai Zhao et al. 2016 Ceramics International, Vollmer et al. WO2012107406) et par la concentration en précurseur silicique (TEOS). Il est difficile d'anticiper et contrôler la taille des particules secondaires ainsi formées.

Des nanoparticules framboise (NPF) ont été utilisées pour rendre des surfaces rugueuses dans le but de les rendre superhydrophobes. Le processus de fabrication des particules framboise nécessite plusieurs étapes successives, parfois complexes où les particules risquent de s'agréger, notamment lorsqu'elles sont de petites tailles, typiquement

inférieures à 150 nm. Une fois les particules agrégées entre elles, il est alors difficile, voire impossible de les désagréger.

Dans l'immense majorité de la littérature, les particules framboise ont des tailles supérieures à 130nm. Dans les autres cas, la littérature propose des mélanges polydisperses de particules de grandes tailles et de nanoparticules de petites tailles, y compris inférieure à 100nm. Ces mélanges de particules ne peuvent pas conduire à la transmission intégrale de la lumière incidente.

Pour synthétiser des particules framboise d'un diamètre inférieur ou égal à 130 nm avant de les appliquer sur des surfaces, il est nécessaire de recourir à des populations de particules individualisées de plus petite taille. Si l'on considère que plusieurs populations de particules peuvent coexister pour former des NPF, alors la plus petite de ces populations doit avoir un diamètre théorique maximal inférieur à 50nm.

Pour obtenir des particules framboise de très petite taille (inférieure à 130nm), la littérature décrit des synthèses où des étapes successives de préparation desdites particules sont réalisées directement sur la surface d'un matériau à recouvrir (Karunakaran et al. ; 2011 Langmuir). Dans ce cas, l'auteur contourne le problème de l'agglomération des nanoparticules de petite taille. Il limite les étapes de synthèse où les particules peuvent s'agglomérer car une fois chaque population de nanoparticules déposée sur une surface, celle-ci n'est plus mobile et ne peut plus former d'agrégat. Ce type de procédé nécessite une préparation complexe et parfois longue de la surface pour obtenir le revêtement de nanoparticules désiré.

Par ailleurs, un moyen simple de manipuler des nanoparticules en maîtrisant leur chimie de surface est d'en disposer sous une forme sèche. C'est-à-dire, un état où les particules ne sont pas solvatées. Cependant, dans cet état, les particules de petites tailles ont tendance à s'agréger pour former des ensembles de particules de plus grandes tailles. Les résultats antérieurs obtenus par notre équipe (WO2015177229) vont dans ce sens. Ils montrent une transparence des surfaces lorsque des NPF de 130 nm sont appliquées. Cependant, le procédé nécessite de sécher les particules ce qui engendrait l'apparition d'agrégats impossibles à éliminer. Par ailleurs, la nature hydrophile des particules permet une bonne suspension uniquement dans les solvants organiques classiques. Par conséquent, dans ce cas, il est nécessaire de réaliser un traitement de surface en deux étapes (dépôt des particules puis dépôt de molécules hydrophobes sur la surface rugueuse) pour atteindre l'effet superhydrophobe et transparent.

A ce jour, aucune étude n'a décrit de nanoparticules de taille inférieure à 50nm pouvant être désagglomérées par des méthodes simples (Sui et al. 2018 Ceramic International ; Kamaly et al. 2017 Adv. Powder Technology). En particulier, il n'a jamais été démontré qu'il était possible de disposer de particules sèches et dispersées d'un diamètre inférieur à 50nm dans le but de les utiliser dans la fabrication de NPF. Il n'a donc jamais été proposé de synthétiser des nanoparticules Framboise de 130nm ou moins par ce mode de synthèse.

Si la dispersion de particules sèches est problématique, la littérature ne décrit pas non plus de nanoparticules framboises obtenues par voie humide, c'est-à-dire à partir de particules qui ne sont jamais désolvatées et présentant une dispersion telle qu'elles permettent d'obtenir une suspension stable de nanoparticules framboises d'un diamètre $<$ 130nm tout en ayant une bonne dispersion.

Il existe donc un besoin pour une méthode de préparation de nanoparticules framboises de petites tailles, typiquement inférieures à 130 nm, en évitant leur agrégation entre elles et permettant une application simple et directe sur une surface non traitée afin d'obtenir un revêtement de nanoparticules framboises en une seule étape, notamment pour rendre la surface superhydrophobe ou superhydrophile.

Déposer ces particules en une seule étape sur des surfaces est un critère important d'industrialisation du procédé. Dans le document WO2015177229, il est décrit la préparation de nanoparticules framboise par voie électrostatique. Celles-ci sont déposées sur la surface puis un agent fluoré est évaporé lors d'une seconde étape pour apporter le caractère superhydrophobe à cette surface. Il est impossible de réaliser ce procédé en une étape en voie liquide car cela nécessite l'ajout de l'agent hydrophobe en milieu liquide qui altère la stabilité des nanoparticules framboise obtenues par voie électrostatique. Ces particules sont à proscrire pour une application en une seule étape d'un revêtement superhydrophobe. Il est donc nécessaire de disposer de particules framboise dont le greffage est durable. Un greffage covalent peut répondre à ce besoin.

Dans l'état actuel des connaissances, ces différentes contraintes ne permettent pas la fabrication de nanoparticules framboise de moins de 130 nm formulées dans un état dispersé. Par ailleurs, certains procédés ne sont pas compatibles avec les contraintes inhérentes à des applications industrielles. En particulier, ils ne sont pas adaptés au traitement de surfaces transparentes en vue de les rendre superhydrophiles ou superhydrophobes.

Les présents inventeurs décrivent pour la première fois un procédé de préparation permettant d'obtenir des suspensions dispersées de nanoparticules framboises, hydrophobées ou non, de taille inférieure ou égale à 130 nm, prêtes à l'emploi pour réaliser un revêtement superhydrophobe ou superhydrophile sur une surface non traitée.

Les inventeurs ont cherché à ce que ces particules soient dispersées dans un ou plusieurs solvants et que leurs formulations soient suffisamment stables au cours du temps pour les rendre applicables sur des surfaces en une seule étape.

Brève description de l'invention

Un premier objet de l'invention consiste en un procédé de préparation d'une suspension comprenant des nanoparticules « framboises » ayant un diamètre de taille X+2Y, chaque nanoparticule framboise étant constituée d'une nanoparticule ayant un diamètre de taille X à la surface de laquelle sont greffées de manière covalente des nanoparticules ayant un diamètre de taille Y,
ledit procédé comprenant au moins les étapes successives suivantes :

(a) Obtention d'une suspension comprenant des nanoparticules ayant un diamètre de taille X dans un solvant S1 aprotique,
(b) Ajout d'un agent d'adhésion dans la suspension résultant de l'étape (a),
(c) Ajout du milieu réactionnel issu de l'étape (b) directement dans une suspension comprenant des nanoparticules ayant un diamètre de taille Y dispersées dans un solvant S1' aprotique, conduisant à la formation de nanoparticules framboise ayant un diamètre de taille X+2Y,
(d) Eventuellement, ajout d'un solvant S2 dans le milieu réactionnel issu de l'étape (c), puis élimination totale ou partielle du solvant S1 et/ou S1', de préférence par centrifugation,
(e) Récupération d'une suspension de nanoparticules framboise ayant un diamètre de taille X+2Y dispersées dans le solvant S1, S1', S2 ou leurs mélanges,

caractérisé en ce que les nanoparticules ayant un diamètre de taille X ou Y et les nanoparticules framboise sont maintenues dispersées en milieu liquide dans toutes les étapes du procédé,
et en ce que le diamètre X+2Y des nanoparticules framboise est inférieur ou égal à 130 nm.
Dans ce procédé, au moins un des diamètres X ou Y a une taille inférieure à 50 nm.
Les particules sont maintenues en milieu liquide tout au long du procédé de façon à empêcher leur agglomération.
Un second objet de l'invention se rapporte à une suspension susceptible d'être obtenue ou directement obtenue par le procédé de l'invention tel que décrit ci-dessus, ainsi qu'à son utilisation pour rendre une surface superhydrophile.
En outre, le procédé de la présente invention permet également de préparer des nanoparticules « framboises » ayant un diamètre X+2Y étant inférieur ou égal à 130 nm fonctionnalisées avec au moins une molécule organique hydrophobe lorsque ledit procédé comprend les étapes (a) à (e) et comprend, à la suite de l'étape (e), les étapes(f) et (g) successives suivantes :

(f) Ajout d'une molécule organique hydrophobe comprenant une fonction de greffage dans la suspension récupérée à l'étape (e),
(g) Récupération d'une suspension de nanoparticules framboise ayant un diamètre de taille X+2Y inférieur ou égal à 130 nm fonctionnalisées avec au moins une molécule organique hydrophobe dans le solvant S1, S1', S2 ou leurs mélanges.

La présente invention concerne donc également une suspension susceptible d'être obtenue ou directement obtenue par le procédé de l'invention comprenant les étapes (a) à (g) ainsi que son utilisation pour rendre une surface superhydrophobe.
Un dernier objet de la présente invention concerne un procédé de recouvrement d'une surface consistant à déposer une suspension selon l'invention sur une surface, en une seule étape.

Description détaillée de l'invention

Procédé de préparation de nanoparticules framboise

Le procédé de la présente invention permet d'obtenir une suspension comprenant des nanoparticules dites « framboises » ayant un diamètre total noté X+2Y et étant inférieur ou égal à 130 nm.
Dans la présente invention, le terme « taille » d'une nanoparticule désigne le diamètre de celle-ci. Par « suspension », on entend au sens de la présente invention un mélange dans lequel la phase dispersante est liquide et la phase dispersée est solide. Au sens de la présente, la suspension est colloïdale, la phase dispersée ne sédimente donc pas ou peu dans la phase dispersante.
Par « nanoparticule » (ou NP), on entend au sens de la présente invention des particules solides sphériques de très petite taille, typiquement de taille nanométrique. Plus précisément, les « nanoparticules » utilisables dans le procédé de l'invention ont un diamètre moyen compris entre 5nm et 100 nm.
Par « bonne dispersion », on entend que les particules ont une taille inférieure à 2 fois leur taille nominale

lorsqu'elle est mesurée par diffusion dynamique de la lumière par exemple. Si cette valeur est respectée, cela signifie qu'aucun agglomérat de grande taille n'est obtenu dans la suspension. Une des conséquences de la bonne dispersion de nanoparticules de taille inférieure à 130 nm est d'obtenir une suspension colloïdale homogène.

Par « population de nanoparticules », on entend, au sens de la présente invention, un ensemble de nanoparticules de même taille ou de taille similaire, i.e., ayant une même forme et une distribution homogène de leurs tailles. En pratique, le diamètre des nanoparticules au sein d'une même population suit une distribution Gaussienne qui peut varier d'au maximum 30%.

Par « nanoparticule framboise » (ou NPF), on entend une nanoparticule ayant un diamètre de taille X sur laquelle sont greffées des nanoparticules ayant un diamètre de taille Y de sorte que les nanoparticules de taille Y recouvrent la surface des nanoparticules de taille X. La nanoparticule de taille X constitue donc le coeur de la nanoparticule framboise. Le recouvrement peut être total de sorte que la totalité de la surface de la nanoparticule de taille X soit recouverte, ou, de manière préférentielle, le recouvrement peut être partiel de sorte que la nanoparticule de diamètre X ne soit pas intégralement recouverte par des particules de diamètre Y, afin de maximiser la rugosité de la nanoparticule framboise. Dans le contexte de la présente invention, les nanoparticules ayant un diamètre de taille Y sont greffées de manière covalente à la surface des nanoparticules ayant un diamètre de taille X. Le diamètre total des nanoparticules framboise résultantes est donc égal à X+2Y.

Selon la présente invention, le diamètre total des nanoparticules framboise obtenues par le procédé est inférieur ou égal à 130 nm, de préférence il est compris entre 30 nm et 100 nm, encore plus préférablement, il est compris entre 50 nm et 100 nm. Avantageusement, les nanoparticules framboise issues du procédé de l'invention ont un diamètre total compris entre 50 et 80 nm. Typiquement, les diamètres X et Y sont chacun compris entre 5 nm et 100 nm, plus préférentiellement compris entre 10 nm et 80 nm, et, de façon encore plus préférentielle, compris entre 10 nm et 50 nm. Les diamètres X et Y sont choisis de façon à ce que X+2Y ne soit jamais supérieur à 130 nm

Selon la présente invention, le ratio de la taille des particules X sur la taille des particules Y est typiquement compris entre 1 et 30, par exemple entre 2 et 30, de manière préférée entre 3 et 10. En d'autres termes, les diamètres X et Y peuvent être identiques. Préférablement, le diamètre X est supérieur au diamètre Y. La nanoparticule de taille X au coeur de la nanoparticule framboise est donc typiquement plus grosse que les nanoparticules de taille Y greffées à sa surface.

Selon un mode particulier de la présente invention, les nanoparticules sont constituées d'un matériau choisis parmi :

- les matériaux inorganiques (comme par exemple le silicium, l'aluminium, le titane, le zinc, le germanium et/ou leurs oxydes et/ou leurs alliages),
- les métaux, les alliages, les oxydes et les céramiques ou encore les composites contenant du carbone, et
- les polymères, parmi lesquels : le polycarbonate, le polyéthylène téréphtalate (PET), le poly méthacrylate de méthyle (PMMA), le polystyrène, le polyéthylène, les polyesters, le poly(acide acrylique) (PAA), le polyacrylamide (PAM), le polyacrylate d'alkyle (polyacrylate de méthyle (PMA), le polyacrylate d'éthyle (PEA), le polyacrylate de butyle (PBA)) et le latex.

Les nanoparticules peuvent également être constituées d'un seul composé ou d'un alliage de plusieurs composés de natures différentes.

Les nanoparticules de taille X et les nanoparticules de taille Y peuvent chacune être constituées d'un matériau différent ou elles peuvent être constituées du même matériau. Avantageusement, elles sont constituées du même matériau.

De manière préférée, les nanoparticules sont constituées d'un matériau inorganique choisi parmi le silicium, l'aluminium, le titane, le zinc, le germanium, et/ou leurs oxydes et/ou leurs alliages.

- Etape (a) :

Lors de l'étape (a), les nanoparticules de taille X sont mises en suspension et dispersées dans un solvant aprotique noté S1.

Par « aprotique » on entend un solvant ne contenant pas d'atome hydrogène acide qui sont généralement liés à un hétéroatome comme l'azote N, l'oxygène O ou le soufre S. Ce solvant aprotique ne contient donc pas d'atome d'hydrogène susceptible d'être libéré de la molécule de solvant pour interagir avec des molécules du procédé.

Par « dispersée » on entend des particules pas ou peu agglomérées en suspension dans un solvant. La conséquence d'une bonne dispersion des particules est que la suspension colloïdale ne décante pas. La dispersion d'une suspension peut être vérifiée par mesure du rayon ou diamètre hydrodynamique. Le rayon hydrodynamique est le rayon d'une sphère théorique qui aurait le même coefficient de diffusion que la particule considérée. Un rayon ou diamètre hydrodynamique proche du rayon ou diamètre réel des nanoparticules témoigne d'une bonne dispersion de celles-ci

au sein du solvant. Plus le rayon ou diamètre hydrodynamique sera important par rapport à la taille réelle des nanoparticules, plus la suspension comprendra des agglomérats de nanoparticules. Le rayon ou diamètre hydrodynamique peut être mesuré par diffusion dynamique de la lumière. Une bonne dispersion peut également être appréciée par une observation de la suspension de nanoparticules. Cette dernière doit être visuellement homogène et ne pas présenter de dépôt sur les bords ou dans le fond du flacon la contenant.

Le solvant S1 assure avantageusement la stabilité de la suspension de particules afin d'éviter l'agrégation et la précipitation des nanoparticules. Il permet notamment la solubilisation de l'agent d'adhésion introduit lors de l'étape (b) suivante. En outre, le solvant S1 est avantageusement inerte vis-à-vis des fonctions réactives présentes à la surface des nanoparticules ou celles appartenant à l'agent d'adhésion. Le solvant S1 est de préférence anhydre.

Préférentiellement, le solvant S1 est un solvant aprotique polaire. Par exemple, il peut être choisi parmi le méthoxy propyl acétate (PMA), l'acétone, la butanone (ou éthyl méthyl cétone, notée MEK), l'acétate de butyle, le méthyl isobutyle cétone (MIBK), ou le butyl glycol acétate (ABG).

Le solvant S1 peut également être un solvant aprotique apolaire ou aprotique faiblement polaire, comme par exemple le toluène ou le xylène

Par « polaire » on entend un solvant dont le moment dipolaire non nul. Il doit, par ailleurs être capable de créer des interactions de types Van der Waals ou hydrogène avec d'autres composés polaires, comme le sont les éléments constitutifs des particules de l'invention.

Selon un mode de réalisation particulier, les nanoparticules de taille X sont mises en suspension et dispersées dans le solvant S1 à une concentration comprise entre 1 g/L et 400 g/L. De façon préférée, cette concentration sera comprise entre 20 g/L et 300g/L.

La dispersion des nanoparticules peut être réalisée mécaniquement, par exemple à l'aide d'un agitateur mécanique ou d'ultrasons.

En parallèle, dans un autre contenant, les nanoparticules de taille Y sont mises en suspension dans un solvant S1', ayant les mêmes propriétés que le solvant S1. Préférentiellement, le solvant S1' est un solvant aprotique polaire. Par exemple, il peut être choisi parmi le méthoxy propyl acétate (PMA), la butanone (ou éthyl méthyl cétone, notée MEK), l'acétate de butyle ou le méthyl isobutyle cétone (MIBK).

De manière préférée, le solvant S1 et le solvant S1' sont identiques.

Selon un mode de réalisation particulier, les nanoparticules de taille Y sont mises en suspension dans le solvant S1' à une concentration comprise entre 1 g/L et 400 g/L. De façon préférée, cette concentration sera comprise entre 20 g/L et 300g/L.

Avant d'être mises en suspension dans les solvants respectifs S1 et S1', les populations de nanoparticules de taille X et de taille Y peuvent être chacune dans un solvant S0 et S0', de préférence identique, ayant un point d'ébullition respectivement inférieur à celui de S1 et S1'. Ces solvants S0 et S0' ne sont pas nécessairement aprotiques. Si les particules ont une taille inférieure à 50nm, il est nécessaire que lors du transfert des nanoparticules dans les solvants respectifs S1 et S1', lesdites nanoparticules restent toujours en milieu liquide. Les nanoparticules ne doivent alors jamais être désolvatées. Pour cela, le solvant S1 est ajouté à la solution comprenant les nanoparticules de tailles X dans le solvant S0, puis le mélange est distillé de façon à évaporer le solvant S0 et à obtenir la suspension de nanoparticules de taille X dans le solvant S1 uniquement. Lors de la distillation, une partie du solvant S1 peut également être évaporée. Le même procédé est appliqué pour obtenir les nanoparticules de tailles Y dans un solvant S1' par élimination du solvant S0'.

Une bonne dispersion des nanoparticules au sein de la suspension est primordiale pour qu'elles puissent réagir avec l'agent d'adhésion lors des étapes suivantes. Le séchage des nanoparticules avant ou pendant le procédé de l'invention entraine une agglomération de celles-ci entre elles. Du fait de la petite taille des particules, l'énergie nécessaire pour ensuite redisperser en milieu liquide celles ayant une taille inférieure à 50 nm devient alors nettement supérieure à ce que peut fournir un appareil utile à cet effet comme un agitateur mécanique ou une sonde à ultrasons, par exemple. Le séchage de ces nanoparticules est donc à éviter.

En cas de mauvaise dispersion, des agrégats de particules d'un diamètre supérieur à 130 nm seraient présents dans le milieu dispersant. La bonne dispersion des particules de petite taille (<50nm) dans un solvant adapté est donc un facteur clés de réussite des étapes ultérieures de la formation des nanoparticules framboises et de leur bonne dispersion en suspension.

- Etape (b) :

Lors de l'étape (b), un agent d'adhésion est ajouté à la suspension de nanoparticules ayant un diamètre de taille X dans un solvant S1. Les nanoparticules de taille X sont alors recouvertes dudit agent d'adhésion à l'issue de l'étape (b).

Dans le contexte de la présente invention, un « agent d'adhésion » est un composé chimique organique qui permet de créer une interaction forte, en particulier une liaison covalente, entre les nanoparticules de taille X et celles

de taille Y qui seront déposées sur celle-ci. De tels agents d'adhésion sont par exemple des molécules organiques dissymétriques porteuses de deux fonctions permettant de réagir de façon séquentielle avec des particules. Lesdits agents d'adhésion sont de préférence des composés de monomères organiques comprenant des fonctions permettant d'assurer une affinité entre les différentes populations de nanoparticules, comme par exemple un groupement chimique réactif permettant la formation de liaisons covalentes.

Ainsi, l'agent d'adhésion va réagir avec les fonctions réactives présentes à la surface des nanoparticules de taille X, puis dans un second temps avec les fonctions réactives présentes à la surface des nanoparticules de taille Y lors de l'introduction de celles-ci à l'étape suivante, afin de créer une liaison covalente entre les nanoparticules de taille X et les nanoparticules de taille Y.

De préférence, l'agent d'adhésion est un alkoxysilane ou un chlorosilane porteur d'une fonction réactive, de préférence une fonction isocyanate. Il s'agit préférentiellement d'un composé silane isocyanate, tel que le 3-(Trimethoxysilyl)propyl isocyanate (NCO-TMS) et le 3-(Triethoxysilyl)propyl isocyanate. On peut également citer les composés silanes époxydes comme par exemple le 3-Glycidoxypropyltrimethoxysilane (GPTMS) ou le 3-Glycidoxypropyltriethoxysilane. Plus préférentiellement, l'agent d'adhésion est le NCO-TMS.

L'agent d'adhésion est typiquement ajouté dans la suspension de nanoparticules de taille X dans le solvant S1 issu de l'étape (a) à une concentration comprise en $10^{-5}$mol/L et 1 mol/L, préférentiellement comprise entre $10^{-3}$ et $10^{-1}$ mol/L.

Typiquement, il est ajouté en excès ou en quantité stœchiométrique par rapport aux nanoparticules ayant un diamètre de taille X, c'est-à-dire par rapport aux fonctions réactives, typiquement des groupements OH, présentes à la surface des nanoparticules. Lorsqu'il est ajouté en large excès, des étapes de centrifugations successives, dialyse ou filtration, et d'élimination du surnageant contenant l'agent d'adhésion en excès sont réalisées à la fin de l'étape (b) pour éliminer l'agent d'adhésion n'ayant pas réagi. Du solvant S1 est alors rajouté pour conserver la même concentration en nanoparticules. Lorsqu'il est ajouté en quantité stoechiométrique ou en léger excès (inférieur à 1,5 fois la quantité stoechiométrique), une étape de purification par centrifugation, dialyse ou filtration, n'est pas nécessaire. De préférence, l'agent d'adhésion est ajouté en quantité stoechiométrique.

Le milieu réactionnel résultant est ensuite avantageusement agité pendant un temps compris entre 1 heure et 24 heures, de préférence pendant 12 heures à 18 heures, typiquement à une température comprise entre 10°C et la température d'ébullition du solvant, de préférence à une température comprise entre 17°C et 30°C.

Les inventeurs ont découvert qu'un temps de contact trop court (typiquement inférieur à 1 heure) entre les nanoparticules de taille X et l'agent d'adhésion ne permet pas une fonctionnalisation suffisante des nanoparticules pour assurer ensuite la liaison entre les particules de différentes tailles. Un temps de contact trop long (typiquement supérieur à 24 heures) conduit les nanoparticules de taille X à réagir entre elles. Un temps trop long peut également conduire à l'hydrolyse des fonctions réactives à la surface des nanoparticules. Dans tous ces cas, la formation de nanoparticules framboise n'est alors plus envisageable.

<u>-Etape (c) :</u>

Lors de l'étape (c), le milieu réactionnel résultant de l'étape (b) est ajouté à la suspension comprenant des nanoparticules de taille Y dans un solvant S1'.

Les fonctions réactives, typiquement des fonctions OH, présentes à la surface des nanoparticules de taille Y vont réagir avec les groupements réactifs de l'agent d'adhésion fixé à la surface des nanoparticules de taille X et ainsi former des nanoparticules framboises de taille X+2Y.

Les nanoparticules ayant un diamètre de taille Y sont avantageusement ajoutées en excès par rapport aux nanoparticules ayant un diamètre de taille X.

Les nanoparticules ayant un diamètre de taille Y sont typiquement ajoutées selon un ratio N.

Le ratio N permettant aux nanoparticules de taille Y de recouvrir entièrement les nanoparticules de taille X (en une seule couche) répond préférentiellement à la formule suivante :

$$N = \frac{\pi\,(Y/2 + X/2)^2}{(Y/2)^2}$$

Où X correspond au diamètre des nanoparticules coeur, et Y au diamètre des nanoparticules externes.

Les inventeurs ont démontré que le greffage n'est jamais total dans ce mode de réalisation de l'invention même lorsque le ratio est supérieur à N. Cela permet de maximiser la rugosité des nanoparticules framboises en évitant son recouvrement intégral par des nanoparticules de taille Y. En effet, une particule entièrement recouverte présentera une rugosité secondaire d'une valeur deux fois moins importante que lorsque le greffage est fait en défaut de particules secondaires, cette rugosité secondaire peut atteindre Y.

Néanmoins, la coexistence de nanoparticules framboises de taille X+2Y et de nanoparticules de taille Y au sein de la suspension peut améliorer la rugosité de surface. Aussi, il est utile de conserver les particules sphériques de taille Y non greffées aux nanoparticules framboises en excès dans la même suspension que les nanoparticules framboises formées. Une fois la formulation appliquée sur une surface, le recouvrement par ce mélange de NPF et de nanoparticules de taille Y assure un recouvrement plus complet que s'il était composé uniquement de NPF. Ce revêtement sert d'interface entre la surface traitée et le milieu extérieur liquide ou gazeux.

Dans un mode de réalisation de l'invention, la quantité de nanoparticules de taille Y sera donc comprise entre N/10 et 2N, de façon préférée entre N/5 et N pour chaque particule de taille X.

Par exemple, pour des nanoparticules de taille Y = 15 nm et de taille X = 50 nm, N=59. De façon préférée, entre 12 et 59 nanoparticules de taille Y seront introduites pour chaque nanoparticule de taille X.

Le milieu réactionnel résultant est de préférence agité à une température comprise entre la température ambiante et le point d'ébullition du mélange de solvants S1 / S1', de préférence entre 80°C et le point d'ébullition du solvant S1/S1', notamment pendant un temps suffisamment long pour que le greffage des nanoparticules de taille Y à la surface des nanoparticules de taille X ait lieu. Préférentiellement, le milieu est agité pendant un temps compris entre 1h et 24h.

La suspension issue de l'étape (c) comprend donc des nanoparticules framboises de taille X+2Y dispersées dans le mélange de solvant S1 et S1'.

En fonction du rendement de greffage, la suspension issue de l'étape (c) pourra comprendre en outre des nanoparticules de taille Y non greffées aux NPF, également dispersées dans le mélange de solvant S1 et S1'.

- Etape (d) :

Cette étape est facultative. Elle peut s'avérer utile pour favoriser le greffage d'une molécule hydrophobe par la suite tout en conservant les propriétés de dispersion des particules dans les étapes ultérieures du procédé.

La suspension de particules issue de l'étape (c) est diluée dans un large volume de solvant S2. Typiquement, ce volume correspond à 1 à 10 fois le volume initial de la suspension.

Selon un mode de réalisation particulier, le solvant S2 est un solvant fluoré.

Par « solvant fluoré » on entend un solvant ou mélange de solvants dont au moins un des composants est partiellement fluoré ou perfluoré.

De préférence, les solvants de l'invention comprennent les HFC (hydrofluorocarbures), les HFE (hydrofluoroéthers), les HFO (Hydrofluorooléfines), les HCFO (hydrochlorofluorooléfines), les PFPE (perfluoropolyéthers).

Selon une caractéristique particulière de l'invention :

- les hydrofluorocarbures sont de préférence des hydrofluoro-(C3-6) alcanes, en particulier le pentafluorobutane (HFC-365-mfc),
- les hydrofluoro-éthers sont de préférence des (C1-4)alkoxy perfluoro-(C4-8) alcanes, en particulier le méthoxy-nonafluorobutane (HFE-7100), l'éthoxy-nonafluorobutane (HFE-7200) et le 1,1,1,2,2,3,4,5,5,5-décafluoro-3-méthoxy-4-terfluorométhyle-pentane (HFE-7300),
- les hydrofluoroléfines sont de préférence celles en C3 à C10 contenant une seule double liaison éthylénique, en particulier le méthoxy tridécafluoro heptène,et
- les perfluoropolyéthers sont des molécules présentant une chaine carbonée perfluorée en C2 à C5 entrecoupée d'atomes d'oxygène, en particulier le polymère d'oxyde de perfluoropropylène.

Dans un mode de réalisation encore plus préféré, le solvant S2 est un HFO, le mélange des isomères du 1,2,3,3,4,4,5,5,6,6,7,7,7-tridecafluoro-1-methoxy-Hept-1-ene [69296-04-04].

Optionnellement, le solvant S1 et/ou le solvant S1' sont éliminés totalement ou partiellement de la suspension. De préférence, cette élimination se fait par distillation, dialyse, filtration, ou centrifugation, notamment par plusieurs centrifugations successives. Le mélange de solvants surnageant est alors prélevé, tout en s'assurant que les nanoparticules restent en milieu liquide et ne sont pas désolvatées, et ledit surnageant est éliminé puis remplacé par du solvant S2. Ce procédé de centrifugation-élimination du surnageant- dilution peut être réitéré plusieurs fois de sorte à faire tendre la concentration en solvant S1 vers zéro et la concentration en solvant S2 vers 100%. A l'issue de ce procédé, une suspension de nanoparticules dispersées en suspension dans un solvant S2 uniquement peut être obtenue ou dans un mélange de solvant S1 et/ou S1' avec S2. Ainsi, lors de cette étape, les nanoparticules ne sont jamais désolvatées et sont donc toujours en milieu liquide.

- Etape (e) :

A l'issue de l'étape (e), une suspension de nanoparticules framboises de taille X+2Y inférieure ou égale à 130 nm dispersées dans un solvant S1, S1', S2 ou leurs mélanges est obtenue.

Selon un mode particulier de l'invention, cette suspension peut en outre comprendre des nanoparticules de taille Y non greffées et également dispersées dans un solvant S1, S1', S2 ou leurs mélanges.

Un objet de l'invention concerne donc la suspension susceptible d'être obtenue ou directement obtenue à la fin de l'étape (e).

Selon un mode particulier de la présente invention, le procédé de l'invention peut comprendre les étapes ultérieures successives (f) et (g) à la suite de l'étape (e) consistant à fonctionnaliser les nanoparticules framboise avec au moins une molécule hydrophobe. Dans ce cas, le procédé comprend les étapes (a) à (e) et comprend, à la suite de l'étape (e), les étapes successives suivantes :

(f) Ajout, d'au moins, une molécule organique hydrophobe comprenant une fonction de greffage dans la suspension récupérée à l'étape (e),

(g) Récupération d'une suspension de nanoparticules framboises ayant un diamètre de taille X+2Y inférieur ou égal à 130 nm fonctionnalisées avec au moins une molécule organique hydrophobe dans le solvant S1, S1', S2 ou leurs mélanges.

Lors des étapes (f) et (g), les nanoparticules framboise sont fonctionnalisées par au moins une molécule organique hydrophobe de façon à être recouvertes d'une couche, préférentiellement d'une monocouche, hydrophobe à la surface de la nanoparticule.

A la différence du document WO2015177229A2 où le dépôt de molécules organiques hydrophobes se fait lors d'une étape supplémentaire de traitement des surfaces après un dépôt de particules, les inventeurs ont réussi à mettre au point un procédé qui permet de réaliser le traitement de la surface des nanoparticules elles-mêmes lorsqu'elles sont en suspension dans un des solvants du procédé et avant leur dépôt sur une surface. La nature covalente de la liaison entre les particules élémentaires constitutives des NPF autorise l'ajout d'au moins une molécule organique hydrophobe ou d'une solution comprenant au moins une molécule organique hydrophobe à la suspension issue de l'étape (e) afin qu'au moins une molécule organique hydrophobe se greffe à la surface des nanoparticules framboises sans en désorganiser la structure.

Les particules obtenues après l'étape (e) peuvent être déposées sur une surface lors d'une première étape pour donner des surfaces superhydrophiles. Elles peuvent également être hydrophobisées par la suite par des molécules hydrophobes tel que décrit dans le document WO2015177229A2.

- Etape (f) :

La molécule organique hydrophobe comprenant une fonction de greffage présente une réactivité vis-à-vis des nanoparticules du procédé. Il s'agit d'une molécule monomérique capable de s'arranger en monocouches auto-assemblées sur la surface des particules. Cette molécule doit créer des liaisons fortes avec la surface, de préférence des liaisons covalentes.

Par « molécule monomérique », on entend une molécule dont la masse moléculaire ne dépasse pas les 2000 g/mol et qui présente une polarité lui permettant une auto-organisation sur la surface des particules. De par cette définition, les molécules monomériques peuvent inclure quelques motifs répétitifs (oligomères) pour apporter la fonction hydrophobe (voir formule générale de la molécule ci-après).

La formule générale de la molécule hydrophobe de l'invention sera A-B-C, dans laquelle :

- A est une fonction de greffage c'est-à-dire un groupement favorisant l'adhésion de la molécule sur la surface de la nanoparticule,
- B est un linker, et
- C est un groupement fonctionnel apportant un caractère hydrophobe et/ou oléophobe à la couche de molécules formée.

Dans un mode de réalisation préféré, le groupement A est choisi parmi :

a) un groupement silane de formule :

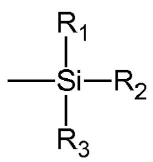

dans laquelle $R_1$, $R_2$, et $R_3$ représentent indépendamment l'un de l'autre un halogène, typiquement un chlore, un brome ou un iode, un groupement hydroxyle OH, un groupement ($C_1$-$C_{10}$) alkyle ou un groupement ($C_1$-$C_{10}$)-alkoxy, à la condition que lorsqu'un substituant parmi $R_1$, $R_2$ et $R_3$ est un groupement ($C_1$-$C_{10}$) alkyle, alors les deux autres substituants sont différents d'un groupement ($C_1$-$C_{10}$) alkyle.

Par « ($C_1$-$C_{10}$) alkyle », on entend au sens de la présente invention une chaîne hydrocarbonée saturée, linéaire ou ramifiée comprenant 1 à 10 atomes de carbone. En particulier, il s'agit d'un méthyle, d'un éthyle ou d'un isopropyle, notamment d'un méthyle.

Par « ($C_1$-$C_{10}$)-alkoxy », on entend au sens de la présente invention, un groupement ($C_1$-$C_{10}$) alkyle lié au reste de la molécule via un atome d'oxygène. Dans le cadre de la présente invention, il s'agit en particulier d'un groupement méthoxy, éthoxy ou isopropoxy.

De préférence, $R_1$, $R_2$, et $R_3$ sont identiques et représentent un groupement ($C_1$-$C_{10}$)alkoxy,

b) un groupement thiol de formule -SH, ou

c) un groupement phosphonate de formule :

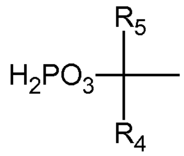

dans laquelle :

R4 représente un atome d'hydrogène H, de fluor ou un groupement OH, et
R5 représente un atome d'hydrogène H, de fluor F ou un groupement $PO_3H_2$,

Dans un mode de réalisation préféré, le groupement B est un groupement L-M où :

- L est un groupement $(CH_2)_m$-Z- , m étant un entier compris entre 0 à 100, de préférence compris entre 0 et 30, et Z étant un groupement alkyle en $C_0$-$C_{100}$ saturé ou non, perfluoré ou partiellement fluoré, la chaîne alkyle pouvant être substituée ou interrompue par 0 à 10 groupements cycloalkyles ou aryles pouvant être perfluorés ou non ; Z peut également être une simple liaison covalente, un groupement $-(O-CH_2-CH_2)_{m'}$, $-(O-CH_2-CH_2-CH_2)_{m'}$, $-(O-CH_2-CH(CH_3))_{m'}$, $-(O-CH(CH_3)-CH_2)_{m'}$, m' étant un entier compris entre 0 et 100, de préférence compris entre 0 et 50, et
- M est choisi parmi :

a) une liaison chimique simple, un atome d'oxygène O, un atome de soufre S, ou un groupement S(CO), (CO)S, ou NR, (CO)NR, NR(CO), R étant un atome d'hydrogène ou un alkyle en $C_1$-$C_{10}$, ou

b) les groupements suivants :

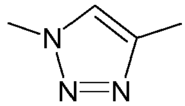 , 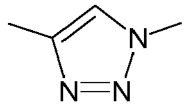 .

Dans un mode de réalisation préféré, le groupement C est choisi parmi un atome d'hydrogène, $-(CF(CF_3)CF_2O)_n-CF_2-CF_2-CF_3$, $-(CF_2CF(CF_3)O)_n-CF_2-CF_2-CF_3$, $-(CF_2CF_2CF_2O)_n-CF_2-CF_2-CF_3$, $-(CF_2CF_2O)_nCF_2-CF_3$, $-CF(CF_3)-O-(CF(CF_3)CF_2O)_n-CF_2-CF_2-CF_3$, $-CF(CF_3)-O-(CF_2CF(CF_3)O)_n-CF_2-CF_2-CF_3$, $-CF(CF_3)-O-(CF_2CF_2CF_2O)_n-F_2-CF_2-CF_3$, ,$-CF_2-O-(CF_2CF_2O)_n-CF_2-CF_3$ ou $C_pF_{2p+1}$, dans lesquels n et p sont des entiers compris entre 1 et 100, de préférence entre 1 et 50.

De préférence, la molécule organique hydrophobe est une molécule fluorée, c'est-à-dire comprenant au moins un atome de fluor.

Dans un mode de réalisation encore plus préféré, la molécule hydrophobe a une formule A-B-C dans laquelle :

A est un groupement silane de formule :

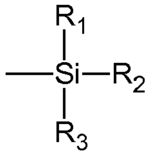

dans laquelle $R_1$, $R_2$, et $R_3$, représentent indépendamment l'un de l'autre un halogène, typiquement un chlore, un brome ou un iode, un groupement hydroxyle OH ou un groupement ($C_1$-$C_{10}$alkoxy. B est un groupement L-M où :

- L est un groupement $(CH_2)_m$-Z- , m étant un entier compris entre 0 à 100, de préférence compris entre 1 et 30, de manière encore plus préférée entre 1 et 10, et
- M est un groupement NR, (CO)NR, NR(CO), R étant un atome d'hydrogène ou un alkyle en $C_1$-$C_{10}$,

et
C est un groupement $-(CF(CF_3)CF_2O)_n-CF_2-CF_2-CF_3$, $-(CF_2CF(CF_3)O)_n-CF_2-CF_2-CF_3$, $-(CF_2CF_2CF_2O)_n-CF_2-CF_2-CF_3$, $-(CF_2CF_2O)_nCF_2-CF_3$, $-CF(CF_3)-O-(CF(CF_3)CF_2O)_n-CF_2-CF_2-CF_3$, $-CF(CF_3)-O-(CF_2CF(CF_3)O)_n-CF_2-CF_2-CF_3$,
$-CF(CF_3)-O-(CF_2CF_2CF_2O)_n-CF_2-CF_2-CF_3$, ,$-CF_2-O-(CF_2CF_2O)_n-CF_2-CF_3$ ou $C_pF_{2p+1}$-dans lesquels n et p sont des entiers compris entre 1 et 50, de préférence entre 1 et 30. Préférablement, C est un groupement $-CF(CF_3)-O-(CF_2CF(CF_3)O)_n-CF_2-CF_2-CF_3$, n'étant notamment compris entre 1 et 4.

Dans un mode de réalisation encore plus préféré, la molécule hydrophobe a pour formule développée :

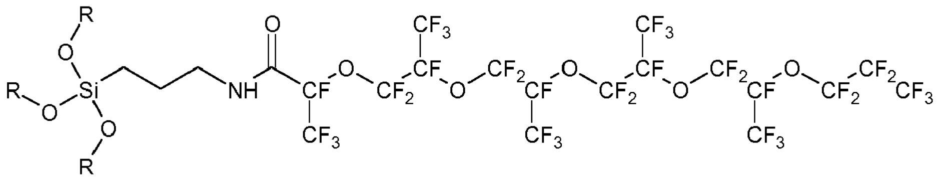

dans laquelle R représente un groupement ($C_1$-$C_4$) alkyle, de préférence un méthyle ou un éthyle. Cette molécule, une fois déposée sur des particules ayant subi le procédé de l'invention, augmente l'hydrophobicité et l'oléophobicité de celles-ci de manière très avantageuse.

Lorsque la molécule organique hydrophobe comprend au moins un atome de fluor, le solvant S2 est préférablement un solvant fluoré tel que défini ci-dessus.

Lors de l'étape (f), une molécule ou un mélange de molécules correspondant à la définition A-B-C ci-dessus peut être ajoutée à la suspension issue de l'étape (e). De préférence, une seule molécule organique hydrophobe est ajoutée.

La ou les molécule(s) organique(s) hydrophobe(s) peu(ven)t être ajoutée(s) à l'étape (f) selon une quantité Q qui permet de recouvrir une surface comprise entre 1 et 10 fois la surface disponible sur les nanoparticules framboises et éventuellement les particules de taille Y dans la suspension issue de l'étape (e).

Par « surface disponible » on entend la surface développée des nanoparticules capable d'accueillir le greffage des molécules hydrophobes. Il est connu de l'homme de l'art qu'une molécule capable de former des monocouches auto-assemblées occupe une empreinte sur les surfaces sur lesquelles elles sont greffées. La quantité Q représente alors le rapport entre la surface A1 développée des particules et la surface A2 de l'empreinte estimée d'une molécule hydrophobe. Lorsque le ratio $A1/(Q*A2) = 1$, alors les quantités sont dites stoechiométriques.

De préférence, la quantité Q est égale à 1 (la molécule est ajoutée en quantité stoechiométrique). Suite à l'ajout de la ou les molécule(s) organique(s) hydrophobe(s) à la suspension résultante de l'étape (e), le milieu réactionnel résultant est typiquement agité pendant une période allant de 1 à 48h, de préférence de 6 à 24h. La réaction peut être réalisée à une température comprise entre 10°C et la température d'ébullition du solvant de la suspension, typiquement entre 10°C et 150°C. Par exemple, la température correspond à la température ambiante ou à la température de reflux du milieu. De préférence, il s'agit de la température à reflux.

Par température ambiante, on entend au sens de la présente invention, une température comprise entre 10°C et 40°C, de préférence entre 18°C et 25°C.

Lorsque la ou les molécules organiques sont ajoutées en excès par rapport aux nanoparticules framboises ayant un diamètre de taille X+2Y et éventuellement par rapport aux nanoparticules ayant un diamètre de taille Y, le procédé comprend avantageusement une étape intermédiaire (f') entre les étapes (f) et (g) dans laquelle l'excès de molécule organique hydrophobe est éliminé. Par exemple, cette élimination se fait par centrifugation, culottage des

particules et renouvellements successifs du solvant de la suspension.

Par culottage des particules, on entend une étape qui accélère la sédimentation des particules de façon à former un culot de particules dans le fond d'un contenant et pouvoir ensuite éliminer le liquide surnageant. Dans ce cas, le culot est toujours dans un volume minimal de solvant qui enrobe les particules. L'ajout d'une nouvelle quantité de solvant permet de re-suspendre les particules et de répéter ensuite l'étape de centrifugation. Le culottage des particules permet ainsi de changer tout ou partie du solvant dans lequel les particules se trouvaient initialement.

Les nanoparticules ne sont ainsi jamais désolvatées au cours des étapes (f) à (g) et sont donc toujours en milieu liquide.

- Etape (g) :

A l'issue de l'étape (g), une suspension de nanoparticules framboises de taille X+2Y inférieure ou égale à 130 nm, fonctionnalisées avec au moins une molécule organique hydrophobe, dispersées dans un solvant S1, S1', S2 ou leurs mélanges est obtenue. Ladite molécule organique hydrophobe greffée à la surface des nanoparticules framboise forme une couche hydrophobe à la surface desdites nanoparticules.

Selon un mode particulier de l'invention, cette suspension peut en outre comprendre des nanoparticules de taille Y également fonctionnalisées avec au moins une molécule organique hydrophobe et dispersées dans le solvant S1, S1', S2 ou leurs mélanges. Ladite molécule organique hydrophobe greffée à la surface des nanoparticules de taille Y forme une couche hydrophobe à la surface desdites nanoparticules.

Un objet de l'invention concerne donc la suspension obtenue à la fin de l'étape (g).

Utilisation des suspensions de l'invention

La présente invention concerne également l'utilisation de la suspension susceptible d'être obtenue ou directement obtenue à la fin de l'étape (e) du procédé afin de rendre une surface superhydrophile.

Par « superhydrophile », on entend, au sens de la présente invention, un matériau qui donne des angles de contact avec l'eau inférieurs à 10°, de préférence inférieurs à 5°. L'angle de contact est mesuré par dépôt d'une goutte d'eau sur une surface plane du matériau et mesure de l'angle que fait la tangente de la goutte avec le matériau.

Selon un autre objet, la présente invention concerne l'utilisation de la suspension susceptible d'être obtenue ou directement obtenue à la fin de l'étape (g) du procédé afin de rendre une surface superhydrophobe.

Par « superhydrophobe », on entend, au sens de la présente invention, un matériau qui donne des angles de contact avec l'eau supérieurs à 150°. L'angle de contact est mesuré par dépôt d'une goutte d'eau sur une surface plane du matériau et mesure de l'angle que fait la tangente de la goutte avec le matériau.

Les suspensions de l'invention peuvent être appliquées à la surface d'une très grande variété de matériaux. En particulier, elles peuvent être appliquées sur des surfaces transparentes. Les suspensions de l'invention n'affectent pas la transparence de la surface sur laquelle elles sont déposées. Elles peuvent également être appliquées sur des surfaces non transparentes sans en altérer la teinte.

Cette surface peut notamment être constituée d'un composite contenant du carbone (graphène, nanotubes de carbone, SiC, SiN, SiP, graphite), d'une matière polymérique, d'un métal, d'un alliage, ou d'un oxyde métallique. En outre, elle peut être un composite de matériaux organiques polymériques et de matériaux inorganiques. Elle peut aussi être appliquée sur des matériaux organiques comme le bois ou le coton.

Plus particulièrement, cette surface peut être en acier, en acier inoxydable, en oxyde d'indium et d'étain (ITO), en zinc, en sulfure de zinc en aluminium, en titane, en or, en chrome ou en nickel. Alternativement, cette surface peut être constituée de silicium, d'aluminium, de germanium et/ou d'oxydes de ceux-ci et/ou de leurs alliages comme par exemple le quartz, les verres borosilicatés comme le BK7, ou sodo-calciques. Elle peut également être constituée de polycarbonate (PC), poly éthylène téréphtalate (PET), poly methacrylate de méthyle (PMMA), polyamides (PA), poly alcools vinyliques (PVAl), polystyrène, polyéthylène (PE), polypropylène (PP), polyacétate de vinyle (PVA), poly (acide lactique), poly acide glycolique, polyester, poly(acide acrylique) (PAA), polyacrylate, polyacrylamide (PAM), polyacrylate d'alkyle (polyacrylate de méthyle (PMA), polyacrylate d'éthyle (PEA), polyacrylate de butyle (PBA)), poly(acide méthacrylique) (PMA), polyméthacrylate, polytetrafluoro ethylène (PTFE), polyacrylonitriles (PAN), polychlorures de viinyles (PVC) ou encore de polyfluorure de vinylidène (PVDF), en particulier de polycarbonate, de poly methylméthacrylate (PMMA), de polypropylène , de polyacétate de vinyle (PVA), de polyamides (PA), de poly(téréphtalate d'éthylène) (PET), de poly alcools vinyliques (PVAl), de polystyrènes (PS), de polychlorures de viinyles (PVC) ou de polyacrylonitriles (PAN). Ces différentes matières polymériques pouvant être présentes en mélange ou sous forme de copolymères.

Dans un mode de réalisation préféré, les suspensions de l'invention sont appliquées à une surface constituée d'au moins 50%, de préférence d'au moins 75%, de silice, d'aluminium, de germanium, d'oxydes de ceux-ci ou d'alliages de ceux-ci. Idéalement, il s'agit d'une surface constituée à 100% de ces composés. Dans un mode de réalisation préféré, la surface est transparente, en verre ou en silice en PMMA ou en polycarbonate.

Les surfaces ainsi traitées peuvent être utilisées dans différentes applications, par exemple dans des équipements optiques ou optroniques (systèmes d'affichage, lentilles, hublots, lunettes, visière de protection, visière casque), les énergies renouvelables (panneaux solaires), les matériaux de constructions (fenêtres et portes), l'industrie automobile ou aérospatiale, les parebrises, les rétroviseurs ou les télécommunications (pour les radars par exemple).

Les surfaces ainsi traitées peuvent être utilisées notamment dans des applications liquidophobes, l'anticorrosion, l'antigivre ou l'antisalissure dans des domaines industriels comme par exemple la cryogénie, l'aéronautique, l'éolien, ou encore le cycle.

Les surfaces ainsi traitées peuvent alternativement être utilisées notamment dans des applications liquidophiles, anti-condensation, anti-buée, mouillage.

Procédé de recouvrement d'une surface

Un autre objet de l'invention concerne un procédé de recouvrement d'une surface telle que définie ci-dessus consistant à déposer une suspension telle que définie ci-dessus sur une surface, en une seule étape.

Ce procédé vise donc à rendre une surface rugueuse et superhydrophile lors du dépôt d'une suspension susceptible d'être obtenue ou directement obtenue à la fin de l'étape (e) du procédé ci-dessus ou à rendre une surface rugueuse et superhydrophobe lors du dépôt d'une suspension susceptible d'être obtenue ou directement obtenue à la fin de l'étape (g) du procédé ci-dessus.

Par « étape unique » on entend au sens de la présente invention que la surface est recouverte directement par dépôt d'une couche de suspension selon la présente invention. Le recouvrement de surface est obtenu par une seule application d'une unique formulation/suspension sans étape ultérieure. Aucun recuit n'est nécessaire pour obtenir l'effet escompté.

La stabilité des suspensions obtenues permet également de les conserver plusieurs jours, de façon préférée plusieurs semaines, de façon encore plus préférée plusieurs mois. Ceci signifie qu'il n'est pas utile de préparer les suspensions extemporanément du moment où elles doivent être appliquées sur une surface.

Le dépôt des suspensions sur la surface à traiter peut être réalisé par exemple par trempage, par « dip-coating », par « spin coating », par pulvérisation, par écoulement, ou encore par essuyage.

Par « dip coating », on entend un moyen de dépôt où la surface à traiter est immergée puis retirée d'une solution/suspension à une vitesse définie (L.D. Landau, V.G. Levich, Acta physicochimica, URSS, 17, (1942), 42).

Par « spin coating », on entend un moyen de dépôt où une solution/suspension est déposée sur la surface à recouvrir. Cette même surface est fixée sur une tournette qui la fait tourner à vitesse contrôlée qui permet à la solution suspension de s'y étaler et d'en mouiller la totalité (D. Meyerhofer, J. Appl. Phys., 49, (1978), 3993).

Par « spray » ou par « pulvérisation », on entend un moyen de dépôt où la solution/suspension est projetée en fines gouttelettes sur la surface. La suspension pulvérisée est projetée sur la surface de façon à en mouiller la totalité.

Par « écoulement » on entend un moyen de dépôt où la solution/suspension est versée sur la surface à recouvrir de façon à en mouiller la totalité.

Par « essuyage », on entend un moyen de dépôt par lequel un tissu, papier ou pinceau, imprégné de la solution/suspension à déposer, est appliqué sur la surface à traiter. Le tissu ou papier est ensuite frotté de façon à mouiller la totalité de la surface.

Dans un mode de réalisation particulier, les suspensions sont déposées sur les surfaces par dip-coating à une vitesse comprise entre 1 et 500 mm/min, de préférence comprise entre 5 et 150 mm/min avec une durée de trempage stationnaire comprise entre 0 et 300 minutes. De façon préférée, le dépôt est réalisé à température ambiante et permet d'obtenir des épaisseurs de couches comprises entre 50 et 1000 nm, et de préférence entre 100 et 500 nm. De manière préférée, les opérations de dip-coating sont répétées au moins deux fois, sans affecter la transparence du matériau.

Dans un autre mode de réalisation particulier, les suspensions sont déposées par spray sur les surfaces à recouvrir. De façon avantageuse, il suffit de procéder une seule fois à cette opération pour obtenir un revêtement superhydrophile ou superhydrophobe.

Description des figures

Figure 1 : NP15 en suspension dans du toluène, de l'acétate de butyle et du MIBK selon l'exemple 2.
Figure 2 : NP50 en suspension dans du toluène, de l'acétate de butyle et du MIBK selon l'exemple 2.
Figure 3 : NP100 en suspension dans du toluène, de l'acétate de butyle et du MIBK selon l'exemple 2.
Figure 4: NP50 et NP15 en suspension dans le MIBK, sans étape de séchage des NP selon l'exemple 3.2.
Figure 5 : images MEB de la formulation de NPF 130 nm dans le toluène selon l'exemple 4.1.
Figure 6 : images MEB de NPF80 synthétisées dans le MIBK selon l'exemple 9.

Exemples

Exemple 1 : Dispersion de nanoparticules de silice sèches dans un solvant protique

1- Des nanoparticules de silice commerciales (Nissan-Chem) de diamètre nominal 15 nm, 50 nm et 100 nm (respectivement NP15, NP50 et NP100) en suspension dans l'IPA à 300g/L sont diluées dans l'IPA de manière à obtenir une concentration de 1 g/L. Ces particules sont donc toujours conservées en milieu liquide.
2- Parallèlement, des nanoparticules de silice de diamètre nominal 15 nm, 50 nm et 100 nm initialement en suspension dans l'isopropanol (IPA) sont séchées à la pompe à palette et remises en suspension dans l'isopropanol (IPA) à une concentration de 1 g/L.

Les solutions sont agitées à l'agitateur magnétique, passées aux ultrasons pendant 30 minutes puis agitées 30 minutes à l'agitateur magnétique de manière à disperser les nanoparticules et éviter les agrégats.
Le rayon hydrodynamique des particules obtenues en 1) et 2) est mesuré par diffusion dynamique de la lumière à l'aide d'un Zetasizer Nano Series ZS de Malvern.

| | | Diamètre hydrodynamique moyen |
|---|---|---|
| 1- Particules avant séchage | NP15 | 38 ± 24 nm |
| | NP50 | 74 ± 1 nm |
| | NP100 | 123 ± 1 nm |
| 2- Particules séchées puis remises en suspension | NP15 | 6082 ± 4900 nm |
| | NP50 | 83 ± 1 nm |
| | NP100 | 130 ± 1 nm |

Le diamètre moyen des particules avant séchage est proche de leur valeur nominale (au rayon hydrodynamique près). La DLS est donc une méthode appropriée pour mesurer le diamètre des nanoparticules et estimer leur dispersion.
Après séchage et remise en suspension dans l'IPA, le diamètre moyen des NP50 et NP100 est proche de leur valeur nominale (au rayon hydrodynamique près) et est similaire au diamètre obtenu à partir de particules restées en milieu liquide.
Dans le cas 2, la remise en suspension dans l'IPA des NP15 conduit à des mesures de diamètre hydrodynamique très élevées (>6000nm). La redispersion est mauvaise du fait des agrégats qui se sont formés. Il n'a pas été possible d'éliminer ces agrégats par agitation et sonication même en utilisant un solvant favorable à la dispersion des nanoparticules de silice (IPA).
Cet exemple montre que l'agrégation des particules augmente avec la diminution de leur diamètre et montre la difficulté voire l'impossibilité de désagglomérer des nanoparticules de faible diamètre. Cela justifie le fait de rester en milieu liquide pour favoriser la bonne dispersion des nanoparticules de diamètre inférieur à 50 nm.

Exemple 2 : Dispersion de particules sèches dans des solvants aprotiques

Des nanoparticules de silice de diamètre nominal 15 nm, 50 nm et 100 nm initialement en suspension dans l'isopropanol (IPA) sont séchées à la pompe à palette et redispersées dans le toluène, l'acétate de butyle (AcBu) ou la méthyl isobutyl cétone (MIBK) à une concentration de 20 g/L.
Les suspensions sont mises 30 minutes aux ultrasons, agitées 1 h et laissées au repos pendant 60 heures.
La stabilité des suspensions est évaluée visuellement en observant la décantation des particules et la présence ou non de dépôt au fond du contenant (Figure 1, Figure 2 et Figure 3).
Quel que soit le solvant utilisé, les NP15 décantent pour former un dépôt au fond du flacon (voir Figure 1).
Les NP50 décantent totalement dans le toluène. La décantation n'est pas totale dans l'acétate de butyle et le MIBK. Néanmoins un dépôt est observable au fond des flacons (voir Figure 2).
Les NP100 décantent dans le toluène et l'acétate de butyle. La suspension de NP100 est stable dans le MIBK

(voir Figure 3).

Cet exemple montre la difficulté de remettre en suspension des nanoparticules de diamètre ≤ 50 nm dans les solvants aprotiques. Cela justifie le fait de rester en milieu liquide pour favoriser la bonne dispersion des nanoparticules de diamètre inférieur ou égal à 50 nm.

Exemple 3 : Substitution d'un solvant polaire par un solvant apolaire en conservant les nanoparticules de silice en milieu liquide

Exemple 3.1 : Nanoparticules (NP) de diamètre 15 nm

Dans un tricol de 500 mL sont introduits

- 10 mL de suspension de NP15 de silice à 300 g/L dans l'IPA
- 130 mL de solvant A

Le solvant A est soit le toluène, soit l'acétate de butyle, soit la méthyl isobutyl cétone (MIBK). Distiller 90 mL de solvant pour que l'IPA et une partie du solvant A soient éliminés. De cette manière les NP15 passent d'une suspension dans un solvant protique à une suspension dans un solvant aprotique sans étape de désolvatation.

Exemple 3.2 : Particules de diamètre 50 nm

Dans un tricol de 500 mL sont introduits

- 10 mL de suspension de NP50 de silice à 300 g/L dans l'IPA
- 150 mL de solvant A

Le solvant A est soit le toluène, soit l'acétate de butyle, soit la méthyl isobutyl cétone (MIBK). Distiller 100 mL de solvant pour que l'IPA et une partie du solvant A soient éliminés. De cette manière les NP50 passent d'une suspension dans un solvant protique à une suspension dans un solvant aprotique sans étape de désolvatation.

Cet exemple permet de remplacer totalement le solvant initialement protique par un solvant aprotique tout en restant en milieu liquide.

Les suspensions colloïdales de NP15 et NP50 ainsi obtenues sont homogènes et ne présentent aucun signe de décantation, signe d'une bonne dispersion des nanoparticules.

Les suspensions issues des exemples 3.1. et 3.2. sont diluées dans le MIBK à 20 g/L (voir Figure 4). Après 60 heures, aucune décantation n'est visible. La suspension est donc stable.

En comparaison avec l'exemple 2, les suspensions de NP50 et de NP15 dans le MIBK sont moins troubles et ne présentent pas de dépôt dans le fond du flacon. Le fait de rester en milieu liquide est donc essentiel pour conserver une bonne dispersion des particules de diamètre inférieur à 50 nm.

Exemple 4 : Synthèse de NPF

Exemple 4.1 : NPF130 synthétisées dans le toluène

Des NP100 de silice en suspension dans l'IPA sont mises en suspension dans du toluène selon le protocole décrit dans l'exemple 3 de manière à obtenir une dispersion stable des nanoparticules. L'agent d'adhésion utilisé est un silane isocyanate (CAS 15396-00-6). Il est ajouté en excès au milieu réactionnel. La réaction est menée pendant 15 h à température ambiante de manière à ce que la fonction silane se greffe sur les NP100.

L'excès de silane isocyanate n'ayant pas réagi est ensuite éliminé par centrifugations, culottage des particules et lavages successifs par du toluène. Les particules sont remises en suspension dans le toluène.

Les NP100 fonctionnalisées par le silane isocyanate sont ensuite introduites dans une suspension de NP15 de silice dans le toluène obtenue telle que décrite dans l'exemple 3. Le milieu réactionnel est porté à 120°C pendant une nuit pour greffer les NP15 de silice sur les NP100 porteuses de fonctions isocyanates.

Ce protocole permet d'obtenir des NPF130 en mélange avec des NP15 non greffées en suspension dans le toluène. A aucun moment de ce procédé, les particules NP15 ne sont désolvatées.

Les images MEB des formulations appliquées sur des surfaces confirment la présence de nanoparticules framboise dispersées (voir Figure 5).

Exemple 4.2 : NPF80 synthétisées dans le MIBK

Des NP50 de silice en suspension dans l'IPA sont mises en suspension dans du MIBK selon le protocole décrit dans l'exemple 3.2. de manière à obtenir une dispersion stable des nanoparticules. Le silane isocyanate (CAS 15396-00-6) est ajouté en quantité stoechiométrique dans la suspension de NP50 de silice dans le MIBK. La réaction est menée pendant 15 h à température ambiante de manière à ce que la fonction silane se greffe sur les NP50.

Les NP50 fonctionnalisées par le silane isocyanate sont ensuite introduites dans une suspension de NP15 de silice dans le MIBK obtenue telle que décrite dans l'exemple 3.1. Le milieu réactionnel est porté à 110°C pendant une nuit pour greffer les NP15 de silice sur les NP50 porteuses de fonctions isocyanates.

Ce protocole permet d'obtenir des NPF80 en mélange avec des NP15 non greffées en suspension dans le MIBK. A aucun moment de ce procédé, les particules NP15 ne sont désolvatées.

Exemple 5 : Fonctionnalisation des NPF130 par un silane perfluoropolyéther (PFPE)

Un trimethoxysilane PFPE de formule

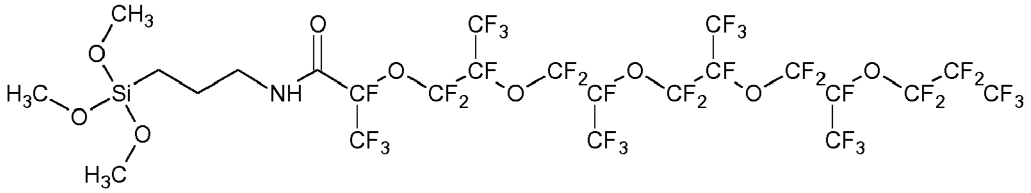

est dissout dans l'isopropanol contenant des nanoparticules framboise de 130 nm de diamètre. Les NPF 130 sont obtenues par greffage covalent de NP15 sur des NP 100, selon le protocole de l'exemple 4.1.

Le mélange contenant un excès de la molécule silane est agité pendant une nuit à température ambiante.

L'excès de silane n'ayant pas réagi est ensuite éliminé par centrifugations, culottage des particules et lavages successifs par du solvant fluoré Novec 7200. Les particules sont remises en suspension dans le Novec 7200.

De cette manière, les particules sont dispersées, sont hydrophobes et sont toujours en milieu liquide lors de l'élimination de l'excès de molécules et lors du changement de solvant.

Exemple 6 : Fonctionnalisation des NPF80 par un silane perfluoropolyéther (PFPE)

Une hydrofluoroléfine, mélange des isomères du 1,2,3,3,4,4,5,5,6,6,7,7,7-tridecafluoro-1-methoxy-Hept-1-ene [69296-04-04] (HFO) est ajoutée à la suspension de NPF80 et NP15 obtenue à l'exemple 4.2, pour remplacer le MIBK. Le MIBK est éliminé par centrifugation de manière à culotter les particules et ensuite les suspendre afin de disposer d'une suspension de NPF80 et NP15 dans le HFO

Un trimethoxysilane PFPE de formule

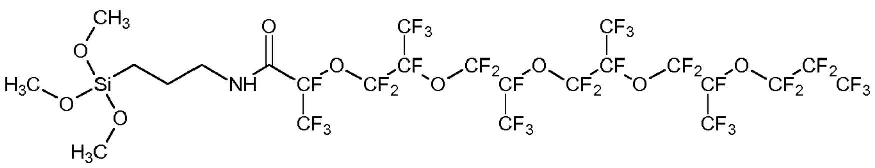

est ajouté en quantité stoechiométrique à la suspension de nanoparticules dans le HFO.

Le mélange est agité pendant une nuit à 110°C.

Cet exemple permet d'obtenir des particules dispersées, hydrophobes et qui restent en milieu liquide tout au long de leur fabrication et de leur stockage.

Exemple 7 : Application de NPF80 sur une surface

Des NPF80 obtenues dans l'exemple 4.2 sont utilisées pour recouvrir des surfaces. La formulation est appliquée en 3 pulvérisations sur une surface de verre et laissée sécher pendant une minute. Les surfaces obtenues sont super-rhydrophiles.

Après hydrophobisation en phase vapeur par la molécule présentée dans l'exemple 5, les surfaces deviennent

superhydrophobes ($AC_{H2O}$= 152°, tilt = 8°).

Exemple 8 : Application de NPF130 hydrophobes sur une surface

Les NPF130 hydrophobes obtenues dans l'exemple 5 sont utilisées pour recouvrir des surfaces. La formulation est appliquée par dip-coating sur une surface de verre et laissée sécher pendant une minute. Les surfaces obtenues sont superhydrophobes ($AC_{H2O}$= 156°).

Exemple 9 : Application de NPF80 hydrophobes sur une surface

Les NPF80 hydrophobes obtenues dans l'exemple 6 sont utilisées pour recouvrir des surfaces. La formulation est appliquée par pulvérisation sur une surface de verre et laissée sécher pendant une minute. Les surfaces obtenues sont superhydrophobes (ACH2O= 153°, angle de roulement = 1°). Les NPF80 ainsi déposées sur la surface sont visibles sur la Figure 6.

## Revendications

1. Procédé de préparation d'une suspension comprenant des nanoparticules « framboises » ayant un diamètre de taille X+2Y, chaque nanoparticule framboise étant constituée d'une nanoparticule ayant un diamètre de taille X à la surface de laquelle sont greffées de manière covalente des nanoparticules ayant un diamètre de taille Y,
ledit procédé comprenant au moins les étapes successives suivantes :

    (a) Obtention d'une suspension comprenant des nanoparticules ayant un diamètre de taille X dans un solvant S1 aprotique,
    (b) Ajout d'un agent d'adhésion dans la suspension résultant de l'étape (a),
    (c) Ajout du milieu réactionnel issu de l'étape (b) directement dans une suspension comprenant des nanoparticules ayant un diamètre de taille Y dispersées dans un solvant S1' aprotique, conduisant à la formation de nanoparticules framboise ayant un diamètre de taille X+2Y,
    (d) Eventuellement, ajout d'un solvant S2 dans le milieu réactionnel issu de l'étape c), puis élimination totale ou partielle du solvant S1 et/ou S1',
    (e) Récupération d'une suspension de nanoparticules framboise ayant un diamètre de taille X+2Y dispersées dans le solvant S1, S1', S2 ou leurs mélanges,

    **caractérisé en ce que** les nanoparticules ayant un diamètre de taille X ou Y et les nanoparticules framboises sont maintenues en milieu liquide dans toutes les étapes du procédé, et
    **en ce que** le diamètre X+2Y des nanoparticules framboise est inférieur ou égal à 130 nm, et
    **en ce qu'**au moins un des diamètres X ou Y a une taille inférieure à 50 nm.

2. Procédé selon la revendication 1, **caractérisé en ce que** le ratio des diamètres X/Y est compris entre 1 et 30, de préférence entre 3 et 10.

3. Procédé selon l'une quelconque des revendications 1 et 2, **caractérisé en ce que** les nanoparticules sont constituées d'au moins un matériau inorganique, tel que le silicium, l'aluminium, le titane, le zinc, le germanium, et/ou leurs oxydes et/ou leurs alliages.

4. Procédé selon l'une quelconque des revendications 1 à 3, **caractérisé en ce que** l'agent d'adhésion est un alkoxysilane ou un chlorosilane porteur d'une fonction réactive, de préférence une fonction isocyanate.

5. Procédé selon l'une quelconque des revendications 1 à 4, **caractérisé en ce que** les nanoparticules ayant un diamètre de taille Y sont ajoutées en excès lors de l'étape (c) par rapport aux nanoparticules ayant un diamètre de taille X.

6. Suspension susceptible d'être obtenue par le procédé tel que défini selon l'une quelconque des revendications 1 à 5, **caractérisée** en qu'elle contient des nanoparticules framboises ayant un diamètre de taille X+2Y inférieur ou égal à 130 nm dispersées dans le solvant S1, S1', S2 ou leurs mélanges.

7. Suspension selon la revendication 6, **caractérisée en ce qu'**elle comprend en outre des nanoparticules ayant un

diamètre de taille Y non greffées aux particules de taille X.

**8.** Procédé de préparation selon l'une quelconque des revendications 1 à 5, comprenant les étapes (a) à (e), et comprenant, à la suite de l'étape (e), les étapes successives (f) et (g) suivantes :

(f) Ajout d'au moins une molécule organique hydrophobe comprenant une fonction de greffage dans la suspension récupérée à l'étape (e),
(g) Récupération d'une suspension de nanoparticules framboises ayant un diamètre de taille X+2Y inférieur ou égal à 130 nm fonctionnalisées avec la molécule organique hydrophobe dans le solvant S1, S1', S2 ou leurs mélanges.

**9.** Procédé selon la revendication 8, **caractérisé en ce que** la molécule organique hydrophobe est une molécule fluorée, de préférence de formule suivante :

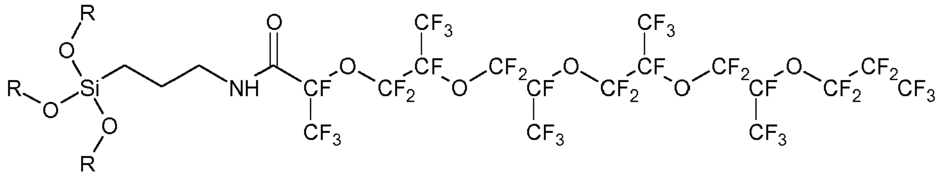

,

dans laquelle R est un groupement ($C_1$-$C_4$) alkyle, préférablement un méthyle ou un éthyle.

**10.** Suspension susceptible d'être obtenue par le procédé tel que défini selon l'une quelconque des revendications 8 et 9, **caractérisée** en qu'elle contient des nanoparticules framboises ayant un diamètre de taille X+2Y inférieur ou égal à 130 nm, fonctionnalisée avec ladite molécule organique hydrophobe, dispersées dans le solvant S1, S1', S2 ou leurs mélanges.

**11.** Suspension selon la revendication 10, **caractérisée en ce qu'**elle comprend en outre des nanoparticules ayant un diamètre de taille Y fonctionnalisées avec une couche de molécules organiques hydrophobes et dispersées dans le solvant S1, S1', S2 ou leurs mélanges.

**12.** Utilisation de la suspension telle que définie selon l'une quelconque des revendications 6 et 7 pour rendre une surface superhydrophile.

**13.** Utilisation de la suspension telle que définie selon l'une quelconque des revendications 10 et 11 pour rendre une surface superhydrophobe.

**14.** Procédé de recouvrement d'une surface consistant à déposer une suspension selon l'une quelconque des revendications 6, 7, 10 et 11 sur une surface, en une seule étape.

**15.** Procédé selon la revendication 14, **caractérisé en ce que** la suspension est déposée sur ladite surface par dip-coating, spin-coating, spray, flow coating ou par essuyage.

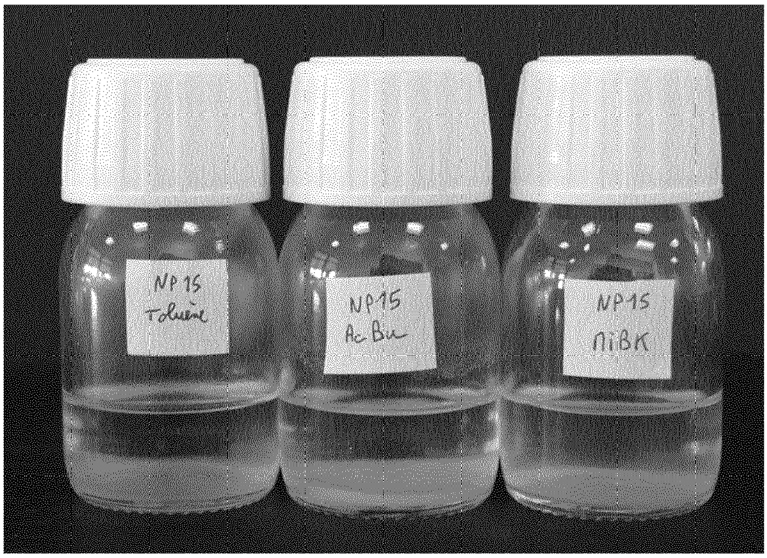


Figure 1

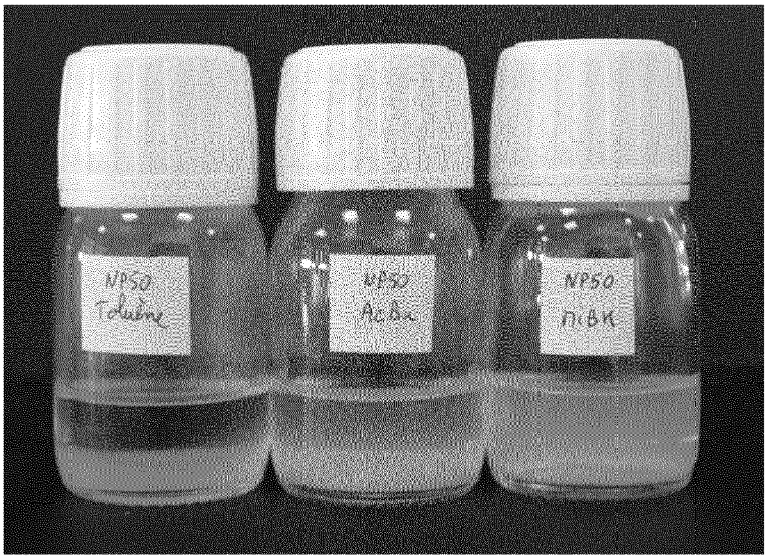


Figure 2

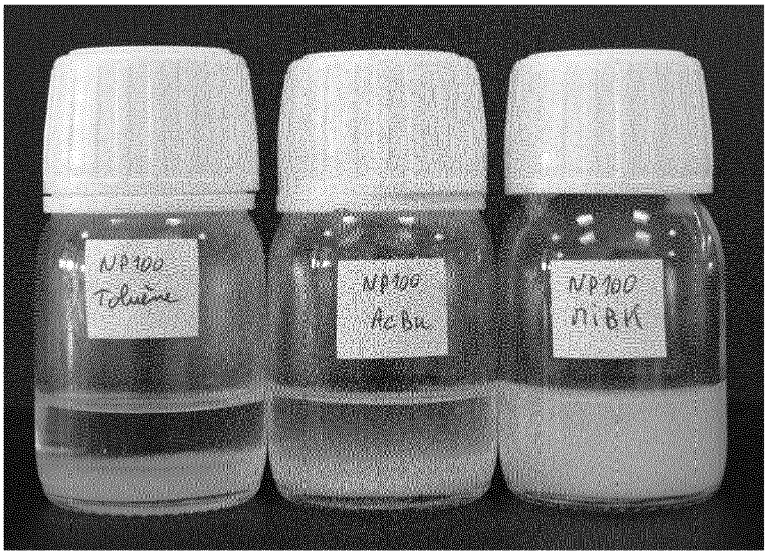


Figure 3

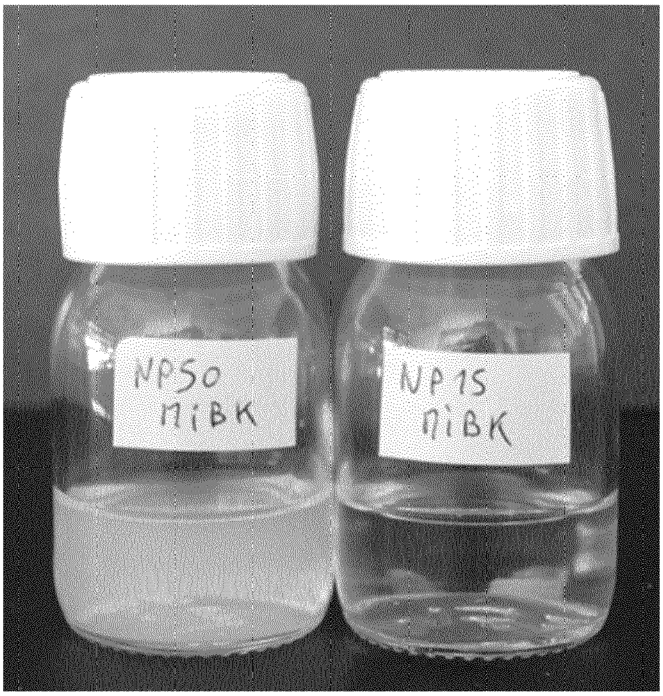


Figure 4

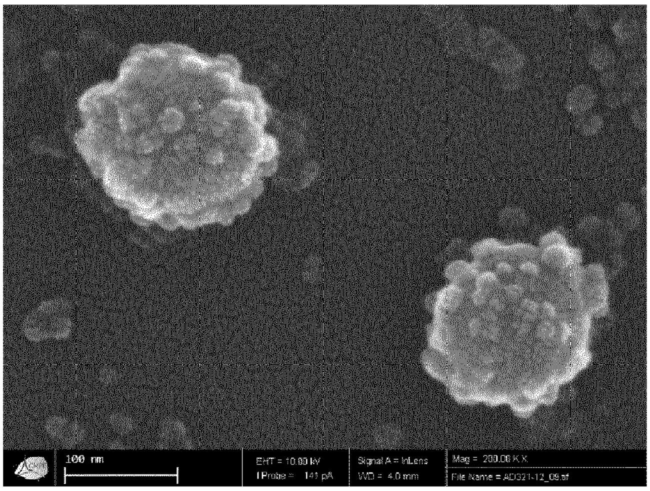


Figure 5

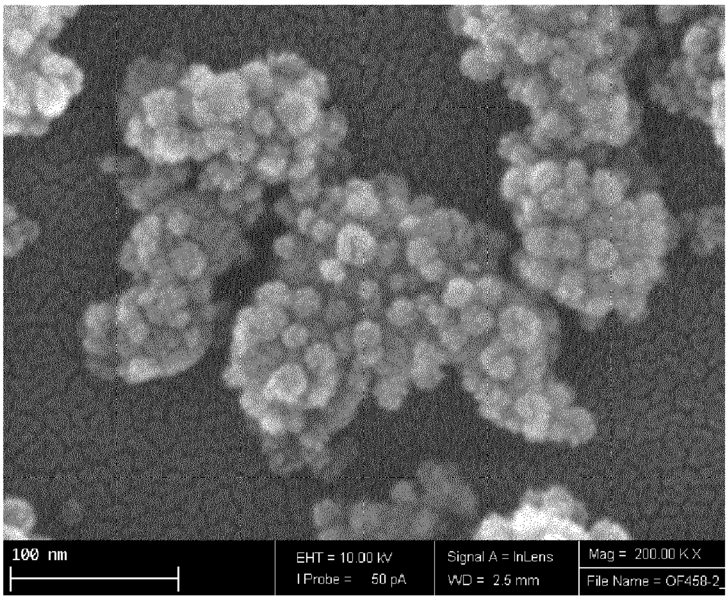


Figure 6

Europäisches Patentamt
European Patent Office
Office européen des brevets

# RAPPORT DE RECHERCHE EUROPEENNE

Numéro de la demande
EP 19 30 6287

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | US 2017/120294 A1 (PORTET DAVID [FR] ET AL) 4 mai 2017 (2017-05-04)<br>* revendications 1-2 *<br>* alinéas [0051], [0068], [0072] - [0076], [0110], [0116], [0122], [0146] *<br>----- | 1-15 | INV.<br>B01J13/02<br>B01J13/20 |
| A | SONG TAO ET AL: "Raspberry-like particles via the heterocoagulated reaction between reactive epoxy and amino groups", COLLOIDS AND SURFACES A: PHYSIOCHEMICAL AND ENGINEERING ASPECTS, ELSEVIER, AMSTERDAM, NL,<br>vol. 469, 17 janvier 2015 (2015-01-17), pages 60-65, XP029142036,<br>ISSN: 0927-7757, DOI: 10.1016/J.COLSURFA.2015.01.016<br>* le document en entier *<br>----- | 1-15 | |

DOMAINES TECHNIQUES RECHERCHES (IPC)

B01J

Le présent rapport a été établi pour toutes les revendications

2

| Lieu de la recherche | Date d'achèvement de la recherche | Examinateur |
|---|---|---|
| La Haye | 8 avril 2020 | Tarallo, Anthony |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 19 30 6287

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-04-2020

| Document brevet cité au rapport de recherche | Date de publication | Membre(s) de la famille de brevet(s) | Date de publication |
|---|---|---|---|
| US 2017120294 A1 | 04-05-2017 | CA 2949412 A1 | 26-11-2015 |
| | | EP 3145642 A2 | 29-03-2017 |
| | | JP 2017522172 A | 10-08-2017 |
| | | US 2017120294 A1 | 04-05-2017 |
| | | WO 2015177229 A2 | 26-11-2015 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2015177229 A
- WO 2012107406 A, Vollmer
- WO 2015177229 A2


### Littérature non-brevet citée dans la description


- **J. SONG et al.** *Chemical Engineering Journal,* 2012
- **YAN et al.** *Advances in Colloid and Interface Science,* 2011
- **CELIA et al.** *J Colloid Interface Science,* 2013
- **LIU et al.** *Ceramics International,* 2015
- **MING et al.** *Nanoletters,* 2005
- **GAO et al.** *Langmuir,* 2006
- **ZHENG-BAI ZHAO et al.** *Ceramics International,* 2016
- **KARUNAKARAN et al.** *Langmuir,* 2011
- **SUI et al.** *Ceramic International,* 2018
- **KAMALY et al.** *Adv. Powder Technology,* 2017
- **L.D. LANDAU ; V.G. LEVICH.** *Acta physicochimica,* 1942, vol. 17, 42
- **D. MEYERHOFER.** *J. Appl. Phys.,* 1978, vol. 49, 3993
- *CHEMICAL ABSTRACTS,* 15396-00-6